Europäisches Patentamt

European Patent Office

Office européen des brevets

(19)

(11) EP 0 731 456 A2

## (12) EUROPEAN PATENT APPLICATION

(43) Date of publication:
11.09.1996 Bulletin 1996/37

(51) Int Cl.6: **G11B 7/12**, G11B 7/135, G11B 11/10

(21) Application number: 96400453.5

(22) Date of filing: 04.03.1996

(84) Designated Contracting States:
DE FR GB

(30) Priority: 04.03.1995 JP 70631/95

(71) Applicant: SONY CORPORATION
Tokyo (JP)

(72) Inventors:
• Toyota, Kiyoshi
Shinagawa-ku, Tokyo (JP)
• Saito, Kimihiro
Shinagawa-ku, Tokyo (JP)

• Nishi, Noriaki
Shinagawa-ku, Tokyo (JP)
• Tamada, Hitoshi
Shinagawa-ku, Tokyo (JP)
• Matsumoto, Shuichi
Shinagawa-ku, Tokyo (JP)

(74) Representative: Thévenet, Jean-Bruno et al
Cabinet Beau de Loménie
158, rue de l'Université
75340 Paris Cédex 07 (FR)

## (54) Optical pickup and optical recording medium reproducing apparatus

(57)    An optical pickup and an optical recording medium reproducing apparatus smaller and more reliable than conventional optical pickups and optical recording medium reproducing apparatuses. These are provided with a one-dimensional metal grid (28) which is formed so that the ratio h/d that the pitch "d" and the thickness "h" of metal conductors (28A) constituting the wire grid is about 0.1 or more, and also a group of light receiving units (23a, 23b) which receive light beams split by the one-dimensional metal grid.

FIG. 20 A

**Description**

BACKGROUND OF THE INVENTION

FIELD OF THE INVENTION

This invention relates to an optical pickup and an optical recording medium reproducing apparatus, and more particularly, to such devices that are suitable for reproducing data from a magneto-optical recording medium.

DESCRIPTION OF THE RELATED ART

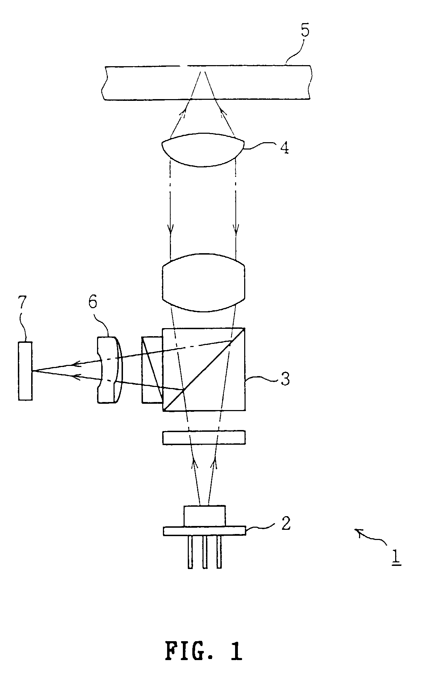

Heretofore, in a magneto-optical recording medium reproducing apparatus, an optical pickup 1 for recording and reproducing a magneto-optical disc having a construction of Fig. 1 is provided. In the optical pickup 1, light emitted from a laser diode (LD) 2 is focused on a disc 5 through a polarization beam splitter (PBS) 3 and an objective lens 4, and the light reflected from the disc 5 is guided to a photodetector (PD) 7 through the objective lens 4, the polarization beam splitter 3, and a multilens 6.

In the actual optical pickup 1, optical parts, such as the laser diode 2, photodetector 7, and polarization beam splitter 3 are provided separatively, so that an optical pickup for recording and reproducing a magneto-optical disc is not sufficiently compact and requires improvement of the reliability.

Besides, as an element for reproducing an optical recording medium, there have been known a composite optical element in which a laser diode, a photodetector, and a prism for light beam splitting which is placed on the photodetector are mounted on the same board (See U.S. Patent 4,823,331), and a monolithic light receiving and emitting device in which a light emitting unit and a raising mirror which are formed by a semiconductor process and a light receiving unit are provided (See Japanese laid open patent application No. 114746/1995).

In the case where light receiving and emitting element of a non-polarization optical system is applied, it is impossible to detect a magneto-optical signal, that is, it is impossible to reproduce a magneto-optical disc.

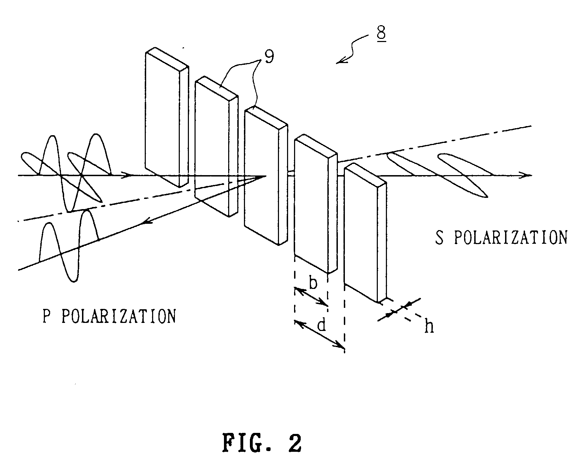

Therefore, it is considered necessary to use a one-dimensional metal grid being wire grid as a polarizer in detection of a magneto-optical signal. A one-dimensional metal grid for rays in the infrared range which has a wavelength about 3 to 10 μm, as shown in Fig. 2, is formed by many wires 9 placed in parallel with each other. When the pitch "d" is selected shorter than the wavelength $\lambda$ of an incident lightbeam, this grid has a characteristic such that it reflects a polarization component parallel to the wires 9 (P polarization) and transmits a polarization component perpendicular to the wires 9 (S polarization). The one-dimensional metal grid 8 operates as a polarizer by utilizing this characteristic.

In the use of the one-dimensional metal grid 8 as a polarizer, two conditions should be satisfied, namely that the ratio b/ of the width "b" of the wire 9 to the pitch "d" is b.d ~O.6, and the ratio $\lambda$/d of the wavelength $\lambda$ to the pitch "d" is $\lambda$/d $\geq$ 5. Therefore, to polarize light in the visible and near-infrared regions, for example, light about 780 nm in wavelength, the pitch "d" needs to have a small value about 100 nm when the refractive index of an ambient medium is taken into account, and thus such a grating is extremely difficult to fabricate.

SUMMARY OF THE INVENTION

In view of the foregoing, an object of this invention is to provide an optical pickup for a magneto-optical recording medium and a magneto-optical recording medium reproducing apparatus which are smaller, more reliable, and that are easy to fabricate.

The foregoing objects and other objects of the invention have been achieved by the provision of a one-dimensional metal grid that is formed so that the ratio h/d of the pitch "d" to the thickness "h" of a metal conductor constituting a wire grid, is about 0.1 or more, and a group of light receiving elements receiving light separated by the one-dimensional metal grid.

By forming a resonance region in the characteristics of transmission and reflection of the one-dimensional metal grid by utilizing the thickness of a metal conductor constituting one-dimensional metal grid, a smaller and more reliable optical pickup for a magneto-optical recording medium can be accomplished compared with the conventional equivalents.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

Fig. 1 is a schematic diagram showing the arrangement of a conventional optical pickup;

Fig. 2 is a schematic diagram showing the arrangement of a known one-dimensional metal grid;

Fig. 3 is a schematic diagram showing the general construction of the optical recording medium reproducing apparatus according to this invention;

Fig. 4A is a schematic diagram showing the arrangement of the optical pickup according to this invention;

Fig. 4B is a block diagram showing the signal processing circuit of a photodetector;

Fig. 5 is a characteristic curvilinear diagram showing the occurrence of a resonance region (when h/d = 0.1, it occurs at about $\lambda_0$/d) in the relation between Ts and $\lambda_0$/d when b/d = 0.4;

Fig. 6 is a cross section of one-dimensional metal grid;

Fig. 7 is a schematic diagram showing a coordinate system for the cross section of one-dimensional metal grid;

Fig. 8 is a characteristic curvilinear diagram showing the relation between the ratio of wavelength to the pitch on the one hand and the S polarization transmittance and the P polarization transmittance on the other hand according to the conventional design theory;

Fig. 9 is a characteristic curvilinear diagram showing the relation between the ratio of wavelength to the pitch and the transmittance, the relation as found by the modal expansion methods is used;

Figs. 10A and 10B are characteristic curvilinear diagrams showing the characteristics of the S polarization wave transmittance and the S polarization wave reflectance, when h/d = 0.1;

Figs. 11A and 11B are characteristic curvilinear diagrams showing the characteristics of the S polarization wave transmittance and the S polarization wave reflectance, when h/d = 0.5;

Fig. 12 is a characteristic curvilinear diagram showing the characteristics of the S polarization wave transmittance, when h/d = 0.01;

Figs. 13A and 13B are characteristic curvilinear diagrams showing the characteristics of the P polarization wave transmittance and the P polarization wave reflectance, when h/d = 0.1;

Figs. 14A and 14B are characteristic curvilinear diagrams showing the characteristics of the P polarization wave transmittance and the P polarization wave reflectance, when h/d = 0.5;

Figs. 15A and 15B are characteristic curvilinear diagrams showing the characteristics of the S polarization wave transmittance and the P polarization wave reflectance, when h/d = 0.4;

Figs. 16A and 16B are schematic diagrams showing a coordinate system at a cross section of one-dimensional metal grid;

Figs. 17A and 17B are schematic diagrams showing the arrangement of the optical pickup in the embodiments;

Fig. 18 is a schematic diagram showing the relation between the angle of incidence and the one-dimensional metal grid in the embodiments;

Fig. 19 is a characteristic curvilinear diagram showing the characteristics of the ratio d/$\lambda_0$ in the embodiments;

Figs. 20A and 20B are schematic diagrams showing the arrangement of another optical pickup according to the present invention;

Fig. 21 is a schematic diagram showing another relation between the angle of incidence and the one-dimensional metal grid in the embodiments;

Fig. 22 is a characteristic curvilinear diagram showing the characteristics of the ratio d/$\lambda_0$ in Fig. 21;

Figs. 23A and 23B are schematic diagrams showing another arrangement of the optical pickup;

Fig. 24 is a schematic diagram showing the relation between incident light and one-dimensional metal grid;

Fig. 25 is a characteristic curvilinear diagram showing the characteristics of the ratio d/$\lambda_0$ in Fig. 24; and

Figs. 26A and 26B are schematic diagrams showing still another arrangement of the optical pickup.

## DETAILED DESCRIPTION OF THE PREFERRED EMBODIMENTS

Preferred embodiments of this invention will be described with reference to the accompanying drawings:

(1) Optical recording medium reproducing apparatus

(1-1) General construction of optical recording medium recording and reproducing apparatus

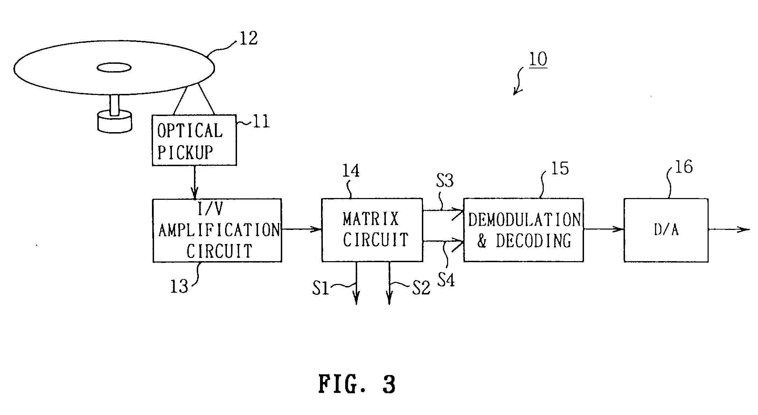

Fig. 3 shows a magneto-optical recording and reproducing apparatus 10 as an example of optical recording medium reproducing apparatus.

In the magneto-optical recording and reproducing apparatus, a laser light is focused on a magneto-optical disc 12 by an optical pickup 11 to irradiate a spot of light with a predetermined intensity necessary for magneto-optical recording and reproducing on the disc. The light reflected from the magneto-optical disc 12 is received by the optical pickup 11 and converted to a detection signal. Then the detection signal is current-to-voltage converted by an I-V amplification circuit 13. The signal output from the I-V amplification circuit 13 is calculated at a matrix circuit 14 and a tracking error signal S1, a focus error signal S2, a magneto-optical signal S3, and an information signal S4 are output. In reproducing, the magneto-optical signal S3 and the information signal S4 are demodulated and decoded by a demodulating and decoding circuit 15, and then output to a digital-to-analog (D/A) converting circuit 16. Thereby, reproduction output of an analog signal is output from the magneto-optical recording and reproducing apparatus 10. (1-2) Optical pickup

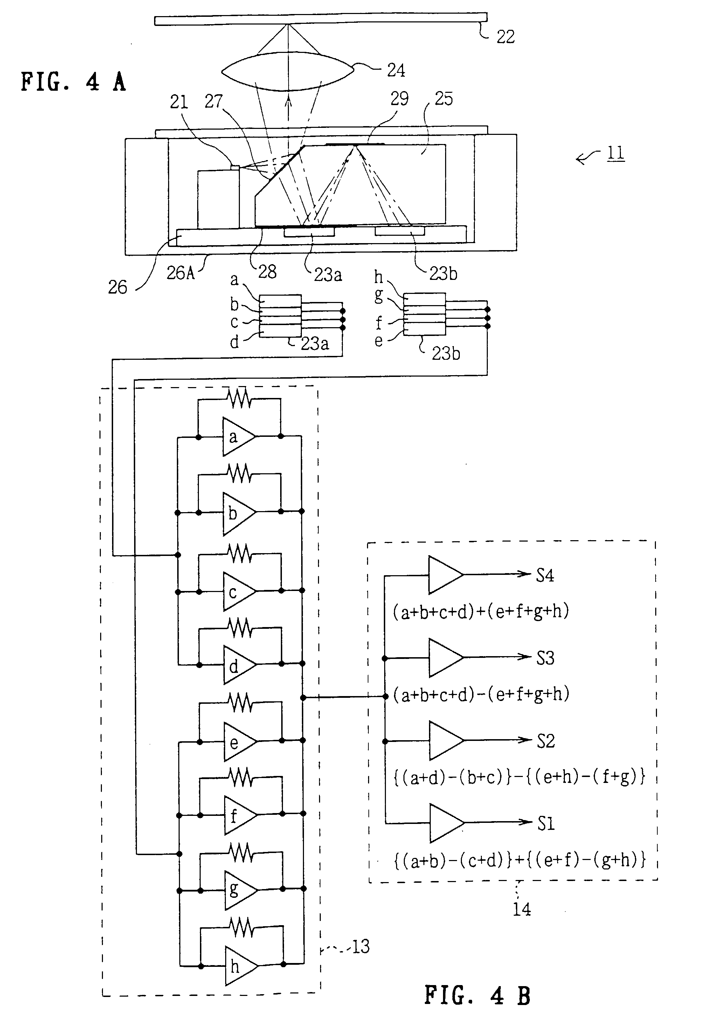

Fig. 4A shows an embodiment of the arrangement of the optical pickup 11 to be provided in the magneto-optical recording and reproducing apparatus 10. The optical pickup 11 is composed of: a laser light source 21 for emitting a light beam; photodetectors 23a, 23b for detecting a signal of a magneto-optical disc 22; an objective lens 24 for focusing the emitted light from the laser light source 21 on the signal recording surface of the magneto-optical disc 22; an optical wave director 25 for reflecting the emitted light to the objective lens 24 and directing the reflected light to the photodetectors 23a, 23b; a board 26 mounting the laser light source 21, the photodetectors 23a, 23b, and the optical wave director 25 on; and a support 26A supporting the board 26. The optical wave director 25 is composed of: a beam splitter film 27 for reflecting the emitted light from the light source 21 and transmitting the returned light from the magneto-optical disc 22; one-dimensional metal grid 28 for transmitting a predetermined polarization component in the light beam that is transmitted through the beam splitter film 27 and directing that component to the photodetector 23, and for reflecting other polarization components; and all-reflection films 29 for reflecting the light beam reflected by the one-dimensional metal grid 28 to the photodetector 23b. It is assumed that the beam splitter film 27 has an S polarization transmittance Ts of 30% and a P polarization transmittance Tp of 65%.

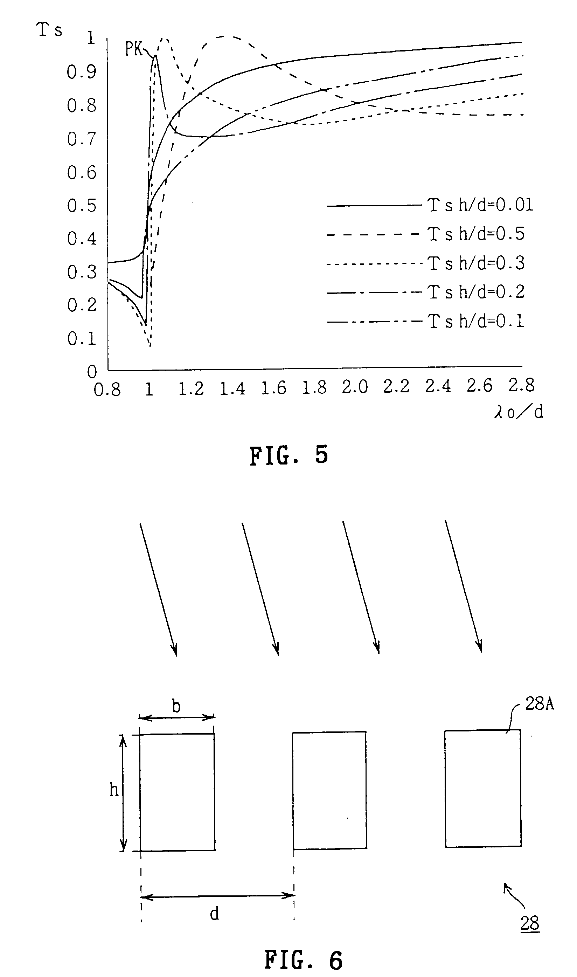

Here, the one-dimensional metal grid 28 satisfies the requirement of $h/d \geq 0.1$ regarding the relation between the thickness "h" of the wire 28A and the pitch "d", so that it operates in the resonance region as described below. If the predetermined requirements are satisfied in the one-dimensional metal grid 28, P polarized light which is parallel to the wire grid (the electric field is parallel with the wire grid) is reflected and S polarized light which is perpendicular to the wire grid (the electric field is at right angles to the wire grid) is transmitted. As for the one-dimensional metal grid 28, it is assumed that the wire is of width "b", the pitch is "d", and the thickness is "h". Fig. 5 shows the relation between the S polarization transmittance Ts and $\lambda_0/d$ when $b/d = 0.4$ and $h/d$ is varied, where $\lambda_0$ is the wavelength of light around the grating, and $\lambda_0 = \lambda/n$. As seen from the graph of Fig. 5, the "resonance region" (where the peak of Ts~1 exists) starts at $h/d \sim 0.1$ or more. Especially, when $h/d = 0.1$ and $\lambda_0/d$ is about 1, a steep peak PK is found. By utilization of the resonance region having the steep peak, $\lambda_0/d$ becomes 1/4 the value that would apply if the resonance region were not used, so that the pitch "d" can be increased by a factor of four, compared with conventional optical pickups under the constant wavelength.

Fig. 4B shows the division patterns and the signal generation manner of two photodetectors 23a and 23b in the optical pickup 11. The photodetector 23a, placed relatively upstream in the path of the incident light along the optical wave director 25, and the photodetector 23b, placed relatively downstream in the path of the incident light, are divided respectively into four light receiving regions (regions a, b, c, and d for the photodetector 23a, and regions e, f, g, and h for the photodetector 23b), and the current output from respective light receiving regions are current/voltage converted at the I-V amplification circuit 13. Then the output is calculated at the matrix circuit 14, as a result, a tracking error signal S1, a focus error signal S2, and information signals S3 and S4 are obtained. The information signal S3 is a magneto-optical signal corresponding to the Kerr rotation angle of the reflected light from the magneto-optical disc 12, and the information signal S4 is an RF signal (light intensity signal) corresponding to the pit.

(2) Principle of constitution of the one-dimensional metal grid

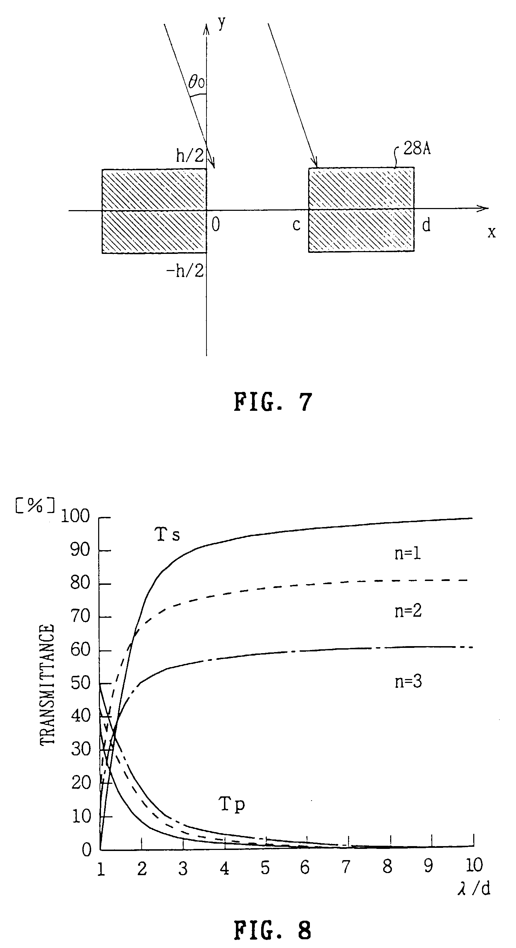

As shown in cross section in Fig. 6, the one-dimensional metal grid 28 is constructed based on the theory considering the ratio of the wavelength "h" and the pitch "d", h/d. In the case where the cross section of the wire 28A of the one-dimensional metal grid 28 is rectangular, modal expansion methods can be applied. In the modal expansion methods, a separation is made between the region between the wires 28A and the region outside the area in consideration. In the region outside the area, the Rayleigh expansion (plane-wave expansion) is applied for the electromagnetic field, similar to the normal refraction theory. In the region between the wires 28A (in Fig. 7, $0 \leq x \leq c$ and $-h/2 \leq y \leq h/2$), the modal expansion is applied, expansion into a mode satisfying boundary conditions at $x = 0$ or $x = c$, for the electromagnetic field. And a coefficient of expansion is determined according to the matching condition between two expansion methods at $0 \leq x \leq d$ and $y = \pm h/2$. More details of the modal expansion will be described later.

(2-1) Principle of one-dimensional metal grid

There is now described the principle of a one-dimensional metal grid. It is assumed that the wire 28A is made of metal being a perfect conductor. On the modal expansion, the following expressions are satisfied.

An S polarization wave (a TM wave, that is, the magnetic field "f" is parallel to the wire grid 28), is expressed by the following equation:

$$f(x,y) = \sum_{m=0}^{\infty} \phi_m(x,y)$$

$$\phi_m(x,y) = \cos(\beta_m x)[a_m\sin(\mu_m y)+b_m\cos(\mu_m y)]$$

$$\beta_m = m\frac{\pi}{c}, \quad \mu_m = +(k_0{}^2-\beta_m{}^2)^{1/2} \qquad \ldots (1)$$

where $a_m$, $b_m$ are complex amplitude

Equation (1) is derived under the condition that the Neumann boundary condition is satisfied (the value of the derivative for the direction of a normal at the interface is zero) when $x = 0$ or $x = c$.

Thus for a TM wave, light is transmitted through the magnetic field between the wires 28A.

A P polarization wave (a TE wave, that is, the electric field is parallel to the wire grid) is expressed by the following equation:

$$\phi_m(x, y) = \sin(\beta_m x) [a_m\sin(\mu_m y) + b_m\cos(\mu_m y)] \qquad (2)$$

Equation (2) satisfies the Dirichlet boundary conditions (the value is zero at the interface because of no electric field in the conductor) when $x = 0$ or $x = c$.

In this case, the zero-order term with respect to "m" is non-existent because $\sin(\beta_0 x) = 0$ for $\beta_0 = 0$. This means that there is no electric field in a region between the wires 28A if terms of first or subsequent degree are neglected.

On the one-dimensional metal grid 28 under the approximate condition (neglecting terms of m-th degree (m > 1)), a TM wave can enter a region between one-dimensional metal grid, but a TE wave cannot. In other words, a TM wave has an electromagnetic field transmitting light, but a TE wave has no electromagnetic field and thus reflects light,

(2-2) Difference of modal expansion methods from conventional theories

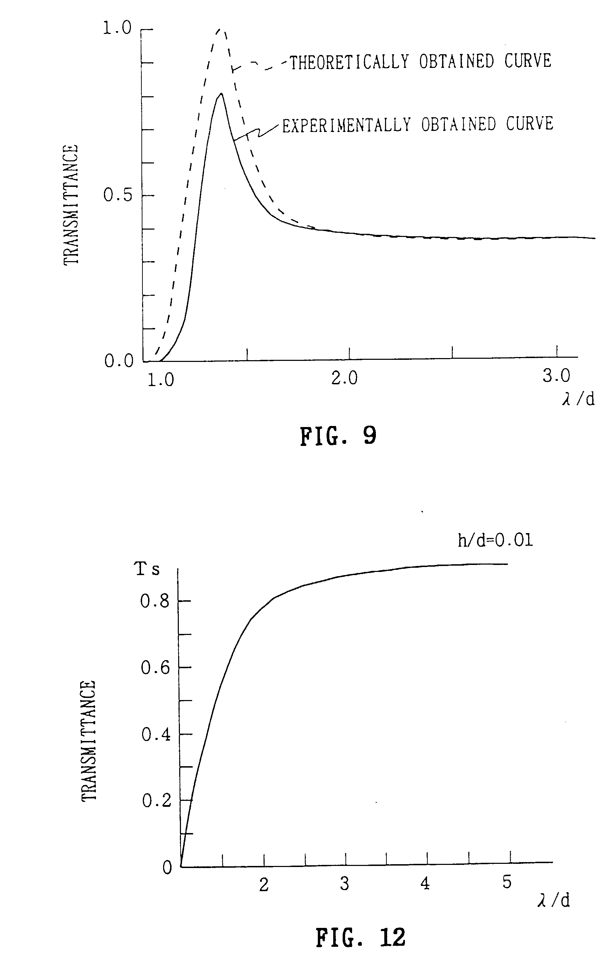

Fig. 8 is a graph of the relation of the S polarization transmittance Ts to the ratio $\lambda/d$ of the wavelength $\lambda$ and the pitch d in a conventional theory. Fig. 9 is a graph of the relation of the S polarization transmittance Ts to the ratio $\lambda/d$ in the modal expansion methods. As seen in the figures, these are extremely different. For comparison of these and obtaining of the S polarization reflectance Rs and the P polarization reflectance Rp, theoretical refraction calculations will be implemented for 0th degree (main transmitted and reflected light) and $\pm$ 1st degree (evanescent wave) in Rayleigh expansion, and also 0th degree (S polarization wave and TM wave) and 1st degree (P polarization wave and TE wave) (P polarization waves have no 0th-degree mode) in modal expansion.

It approximates only terms of low degree as the above, obtains values of S polarization transmittance Ts, P polarization transmittance Tp, S polarization reflectance Rs, and P polarization reflectance Rp, and makes the graph by using Mathematica in the following conditions:

(1) the light is perpendicularly incident,
(2) the wire is made of metal being perfect conductors, and
(3) the pitch "d" satisfies d = 2c.

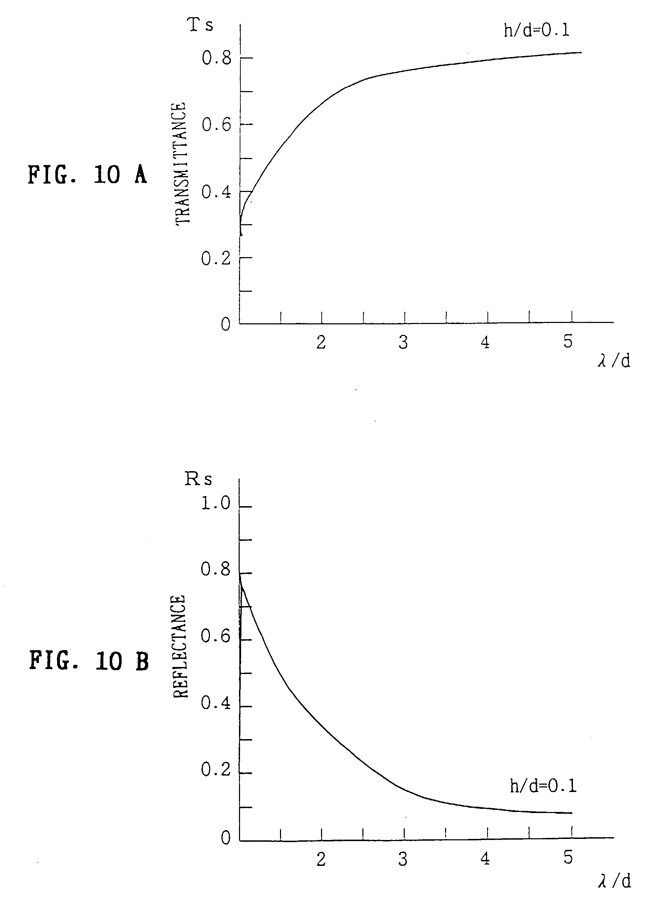

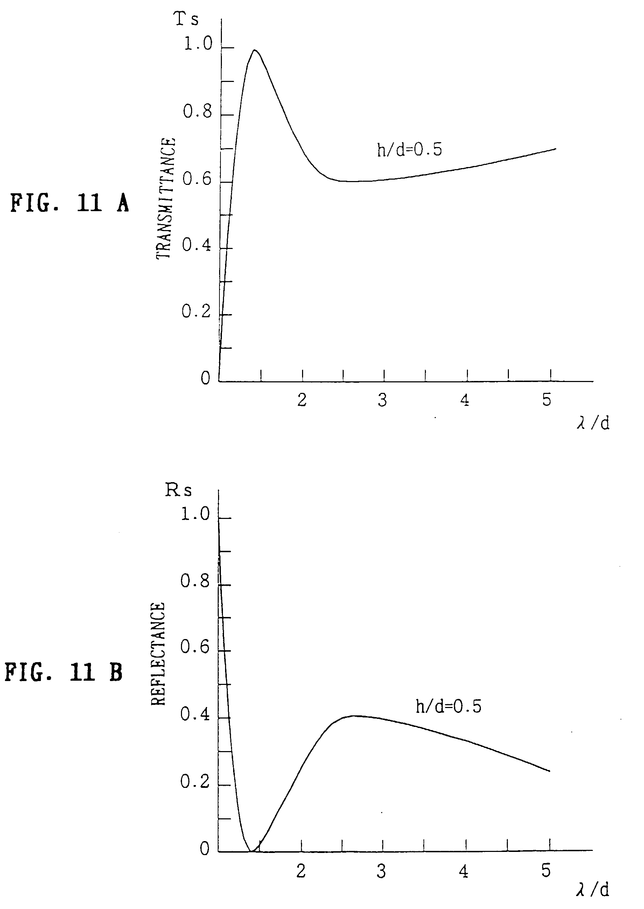

A description will now be given concerning an S polarization wave (TM wave). Figs. 10A and 10B show changes in S polarization transmittance Ts and S polarization reflectance Rs, occurring at h/d = 0.1 (a wire thickness "h" is thin), and Figs. 11A and 11B show that occurring at h/d = 0.5 (a wire thickness "h" is thick, and the cross section thereof is square).

As shown in these figures, the curve at h/d = 0.5 in Fig. IIA is more similar to the curve in the modal expansion methods in Fig. 9 than the curve at h/d = 0.1 in Fig. 10A. In addition to this, as shown in Figs. 10A and 10B, as the wire thickness "h" is reduced, the curve is similar to the curve in a conventional theory in Fig. 8. For example, at h/d = 0.01 (the wire thickness "h" is ultra-thin), the transmittance is almost the same as the curve of Fig. 8.

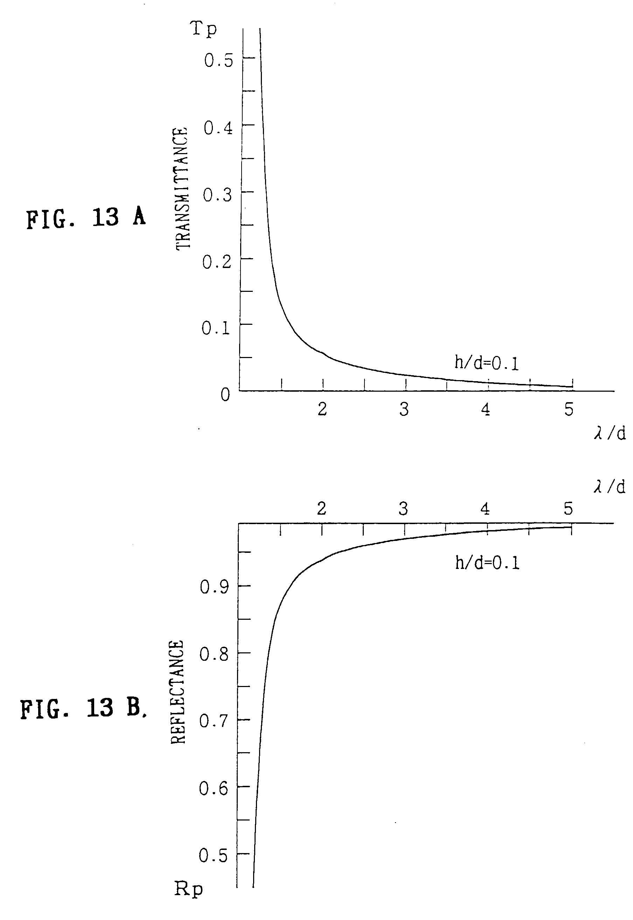

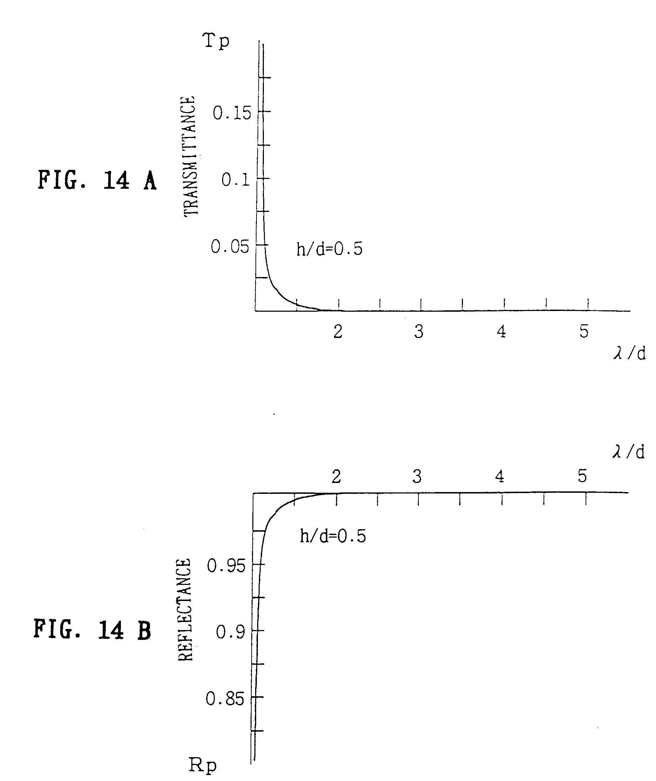

For a P polarization wave (TE wave), as shown in Figs. 13A and 13B, the P polarization wave transmittance Tp and the P polarization wave reflectance Rp at h/d = 0.1 are similar to the curve in a conventional theory in Fig. 8, as in the case of an S polarization wave. On the contrary, as shown in Figs. 14A and 14B, the P polarization wave transmittance Tp and the P polarization wave reflectance Rp at h/d = 0.5 are similar to the curve in the modal expansion methods in Fig. 9.

Considering the case of S polarization wave, Figs. 10A, 10B, 11A, 11B, 13A, 13B, 14A, and 14B show the following which cannot be derived on conventional design theories.

At h/d = 0.5 (the cross section of a wire is square), the value of $\lambda/d$ at Ts = 1 is in the resonance area where $\lambda/d$

~ 1.4, and Rp > 0.99. Assuming λ = 780 nm, the pitch "d" ~ 550 nm and the wire thickness "h" ~ 275 nm for λ/d ~ 1.4, so that it becomes easy in size to produce. That is, the resonance region can be used to evade a conventional problem on production of λ/d ≥ 5.

As described above, conventional design theories hold true of thin wire only. In the above embodiment, however, increasing wire thickness allows the pitch to be increased. Also, it has been found that when wire thickness is reduced, starting at h/d = 0.5, the peak value of λ/d at which Ts = 1 approaches "1", and when wire thickness is further reduced, the extinction ratio Rp/Tp of a P polarization wave is reduced. (2-3) Feasibility of one-dimensional metal grid analyzer

When the cross section of a one-dimensional metal grid is square (d ~ 550 nm, h ~ 275 nm), the extinction ratio Ts/Rs = ∞, and Rp/Tp > 200. To solve the problem on production, it is needed to reduce the ratio h/d.

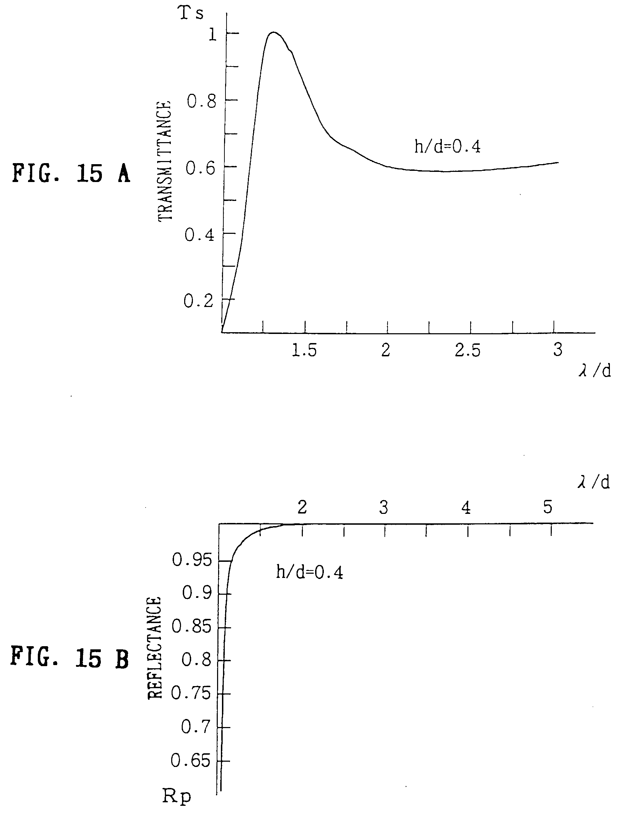

At h/d = 0.4 as shown in Figs. 15A and 15B, Ts/Rs = ∞, and Rp/Tp ~ 40 when d = 618 nm, and h = 247 nm. It is extremely difficult, in general, to produce a wire with the pitch of ~ 0.5 μm or less, that is difficult even with the pitch of 0.5 to 1 μm. The results of tests according to the present invention, however, have shown that a one-dimensional metal grid analyzer offers satisfactory performance under the following conditions:

(1) the light is perpendicularly incident,
(2) the wire is made of perfect conductors,
(3) the cross section of the wire is square, and
(4) the duty factor of the signal is 50%.

Thereby, it was found that a wire grid constant which is easy in process of a one-dimensional metal grid analyzer can be selected.

(3) Coordinate system for one-dimensional metal grid in embodiment

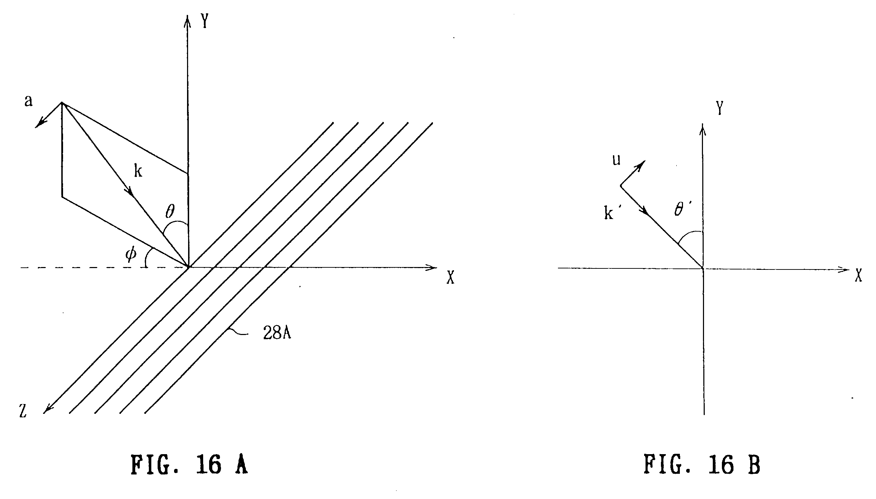

Figs. 16A and 16B show the relationship between a one-dimensional metal grid (not being perfect conductors) to a light beam which is obliquely incident thereon, according to an orthogonal coordinate system. In these Figures, the Z axis is parallel to the wire grid 28, the wave vector of the incident light is represented by k, and the electric field vector of the incident light is represented by a. The components of the k(α, β, γ) are expressed by the following equation:

$$\alpha = k \sin\theta \cos\phi$$

$$\beta = k \cos\theta$$

$$\gamma = k \sin\theta \sin\phi \tag{3}$$

The projection of k on the X-Y plane is represented by k' and a vector at right angles to k' is represented by u. Assuming an angle of u and a as δ, the transmittance T and the reflectance R are expressed by the following equation:

$$T = Tp \sin^2\delta + Ts \cos^2\delta$$

$$R = Rp \sin^2\delta + Rs \cos^2\delta \tag{4}$$

where Tp is P polarization wave transmittance, Ts is S polarization wave transmittance, Rp is P polarization wave reflectance, and Rs is S polarization wave reflectance, being projected on a projection chart.

If analyzer requirements are met in the transmittance T and the reflectance R in Equation (4), the transmittance T ~ cos²δ and the reflectance R ~ sin²δ in accordance with Rp ~ 1, Ts ~ 1, Tp ~ 0, and Rs ~ 0. Forty-five-degree differential wave detection is possible when T = R, that is, when satisfying the following equation:

$$\sin^2\delta = \cos^2\delta$$

$$\text{therefore, } \cos^2\delta = \frac{1}{2} \tag{5}$$

When the electric field of the incident light is represented by a position vector r, the following equation is satisfied:

$$E^i = a \cdot e^{ik \cdot r} \tag{6}$$

For the optical pickup 11 shown in Fig. 4A, the electric field vector a for an incident polarized light is expressed by the following equation, by using the wave vector k of the incident light and the unit vector y" in the direction of the Y axis:

$$a = \frac{k \times y''}{|k \times y''|} = \frac{(-\gamma, 0, \alpha)}{|(-\gamma, 0, \alpha)|} \tag{7}$$

where the angle of Kerr rotation is ignored.

The angle $\delta$ made by the electric field vector a and the vector u at right angles to a, is expressed by the following equation:

$$\cos^2\delta = \frac{(a \cdot u)^2}{|a|^2 |u|^2} \qquad (8)$$

$u(\beta, \alpha, 0)$ is obtained as u from $k'(\alpha, -\beta, 0)$, thus the following equation is satisfied based on Equation (8):

$$\cos^2\delta = \frac{(\beta\gamma)^2}{(\alpha^2+\gamma^2)(\alpha^2+\beta^2)}$$

$$= \frac{\cos^2\theta \cdot \sin^2\phi}{1-\sin^2\theta \cdot \sin^2\phi} \qquad \cdots (9)$$

Equation (5) can be replaced with the following equation:

$$\frac{\cos^2\theta \cdot \sin^2\phi}{1-\sin^2\theta \cdot \sin^2\phi} = \frac{1}{2} \qquad (10)$$

Thus, the relation in the following equation can be obtained:

$$\tan^2\phi = \frac{1}{\cos^2\theta} \qquad (11)$$

When it is assumed that an incidental angle $\theta$ to a wire surface is $0° \leq \theta < 90°$ and $\phi$ is $-90° < \phi \leq 90°$, Equation (11) is expressed by the following equation:

$$\tan\phi = \pm \frac{1}{\cos\theta} \qquad (12)$$

A vector k' which is necessary for obtaining Tp, Ts, Rp, and Rs in projection is expressed by the following equation:

$$k' = \sqrt{k^2-\gamma^2} = k\sqrt{1-\sin^2\theta \cdot \sin^2\phi}$$

$$= \frac{2\pi}{\dfrac{\lambda_0}{\sqrt{1-\sin^2\theta \cdot \sin^2\phi}}} \equiv \frac{2\pi}{\lambda} \qquad \cdots (13)$$

Thus the wavelength $\lambda'$ of the optical components vertically crossing to the wire grid is expressed by the following equation:

$$\lambda' = \frac{\lambda_0}{\sqrt{1-\sin^2\theta \cdot \sin^2\phi}} \qquad (14)$$

From this, the following equation is obtained:

$$\sin\theta' = \frac{\sin\theta \cdot \cos\phi}{\sqrt{1-\sin^2\theta \cdot \sin^2\phi}} \quad (= \frac{\alpha}{k'}) \qquad (15)$$

Hereinafter there will be described an embodiment of the arrangement of the one-dimensional metal grid 28 and detection of the magneto-optical signal.

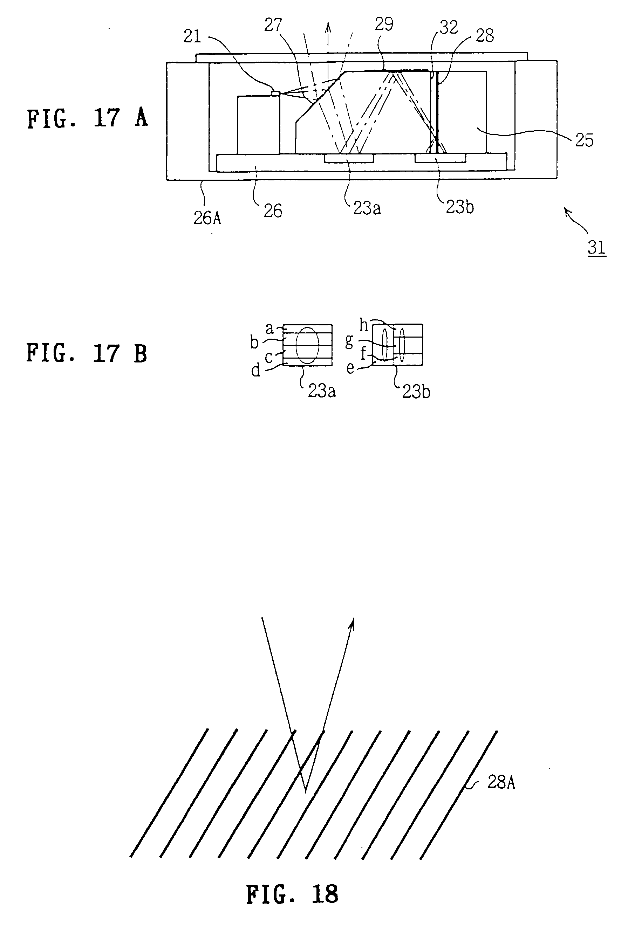

In Figs. 17A and 17B, corresponding parts to those of Fig. 4A are denoted by the same numerals. Fig. 17A generally shows an optical pickup 31 according to a first embodiment in which a one-dimensional metal grid 28 and a half-wavelength plate 32 are placed inside the optical wave director 25 in the lengthwise direction, so as to be orthogonal with photodetectors 23a and 23b.

As shown in Fig. 18, the wire 28A is placed so as to be $\phi = O$ and vary $\theta$ in the relation between the one-dimensional metal grid 28 and the incident light thereto in the optical pickup 31.

In this embodiment, the optical pickup 31 comprises a light source 21, an optical wave director 25, and two photodetectors 23a, 23b, which are supported by a support 26. A beam splitter film 27 is disposed on the incident light irradiated surface of the optical wave director 25 in the optical pickup 31. The light beams incident from the beam splitter film 27 is irradiated to the photodetector 23a provided on a board 26 through the optical wave director 25, and the reflected light beam is incident to a total reflection film 29 facing to the board 26. The total-reflected light beam is passed through a half-wavelength plate 32 which is arranged in the lengthwise direction, and is incident on the one-dimensional metal grid 28 piled up on the half-wavelength plate 32. The transmitted light component and the reflected light component are incident onthe photodetector 23b on the board 26.

The photodetector 23a is divided into four regions a, b, c, and d as in Fig. 4B. The photodetector 23b is divided into four regions, a region "e" which receives the light reflected by the one-dimensional metal grid 28 and three regions "f, g, h" which receive the light transmitted through the one-dimensional metal grid 28.

In the case where $\theta$ is varied at the state where the wire 28A is placed so as to be $\phi = 0$, the transmitted light and reflected light from the wire 28A are composed only of 0th degree light when the following equations are satisfied, it will be described in detail in the clause of the modal expansion methods):

$$\alpha_n = k \sin\theta' + n \frac{2\pi}{d} \tag{16}$$

$$k^2 \le \alpha_{\pm 1}{}^2 \tag{17}$$

$$1 \le (\sin\theta \pm \frac{\lambda_0}{d})^2 \tag{18}$$

From $0° \le \theta < 90°$, and $\lambda_0/d > 0$, the following equation is obtained:

$$d \le \lambda_0 \frac{1}{1+\sin\theta} \tag{19}$$

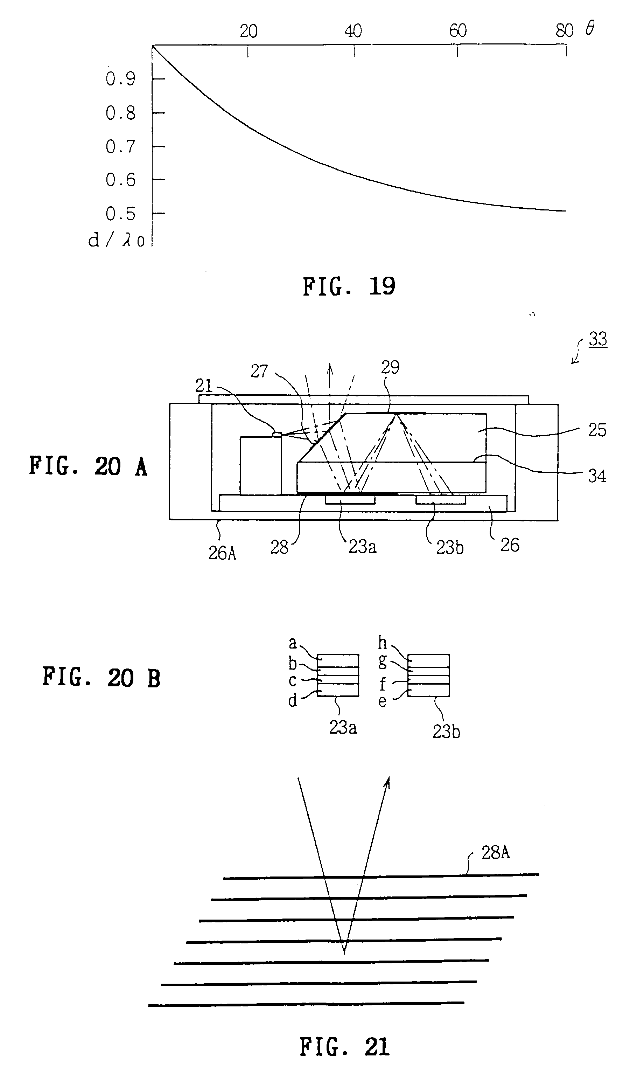

Fig. 19 shows the relation of the angle of incidence $\theta$ to $\lambda_0/d$. The one-dimensional metal grid 28 serves as an analyzer, thereby separating the incident light into a transmitted light and a reflected light, depending on the direction of polarization. As the angle of incidence $\theta$ on the wire surface is increased (Figs. 16A and 16B), the range of the pitch "d" shown by Equation (19) shifts to smaller.

According to the above-described arrangement, the one-dimensional metal grid 28 whose pitch "d" is less than $\lambda_0/(1 + \sin \theta)$ is provided in the lengthwise direction together with the half-wavelength plate 32 in the optical wave director 25 of the optical pickup 31, so that the direction of polarization of the incident light is rotated by 45° by the half-wavelength plate 32 to perform 45° differential wave detection. Therefore, in such arrangement of the wire 28A of the one-dimensional metal grid 28 that the incident light is incidentat $\phi = 0$ as shown in Fig. 18, a smaller and more reliable optical pickup 31 for optical recording medium can be realized.

In the case of the embodiment of Figs. 17A and 17B, the incident light successively reflected at the photodetector 23a and the total reflection film 29 is incident on the half-wavelength plate 32 and the one-dimensional metal grid 28 arranged in the direction to be orthogonal with the photodetectors 23a and 23b. However, instead of this, using an optical pickup having the construction of Figs. 20A and 20B brings the same effects as the embodiment of Figs. 17A and 17B.

In this connection, in the optical pickup 33 of Figs. 20A and 20B, the incident light is incident onthe photodetectors 23a and 23b through the half-wavelength plate 34 which is faced to the photodetectors 23a and 23b on the board 26 and the one-dimensional metal grid 28 which is inserted between the half-wavelength plate 34 and the photodetector 23a.

In the above example of the arrangement of the one-dimensional metal grid 28, the angle of incidence $\theta$ on the wire surface is increased so that the range of the pitch "d", shown by Equation (19), is shifted to smaller. Hereinafter, the contrary case will be described where the range of the pitch "d" is shifted to larger.

In this case, the wire 28A is placed so as to be $\phi = 90°$ as shown in Fig. 21, for the one-dimensional metal grid 28 of the optical pickup 31 shown in Figs. 17A and 17B, and the optical pickup 32 shown in Figs. 20A and 20B.

As shown in Fig. 21, in the case where the wire 28A of the one-dimensional metal grid 28 is placed so as to be $\phi = 90°$, and $\theta$ is varied, the following equation is obtained from Equation (20) under the condition of $\theta' = 0$, $\phi = 90°$:

$$d \le \lambda' = \frac{\lambda_0}{\sqrt{1-\sin^2\theta \cdot \sin^2\phi}}$$

$$= \frac{\lambda_0}{\sqrt{1-\sin^2\theta}} = \lambda_0 \cdot \frac{1}{\cos\theta} \qquad \dots (20)$$

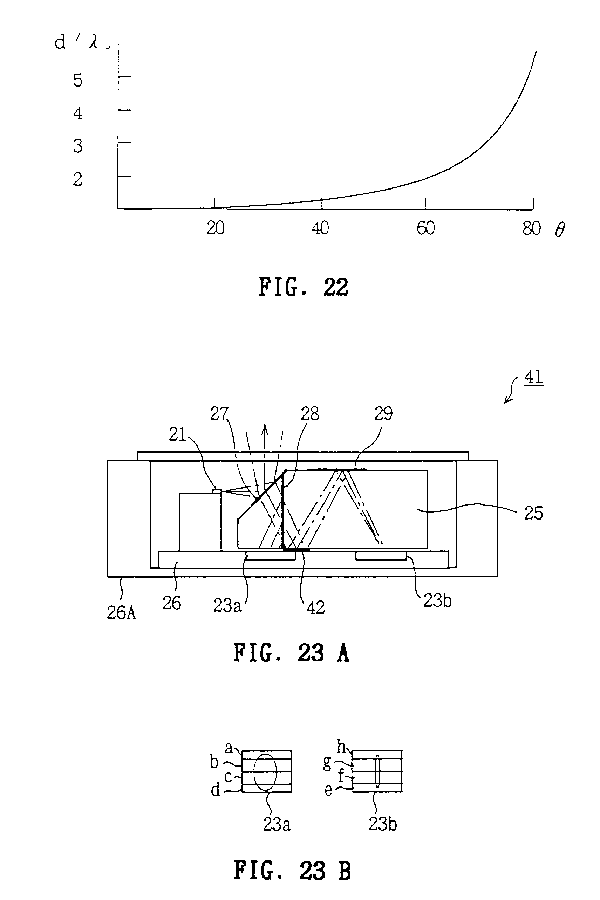

The relation of the angle of incidence $\theta$ to $\lambda_0/d$ is shown in Fig. 22. As found from Fig. 22, in the embodiment of Fig. 21, as the angle of incidence $\theta$ on the wire surface is increased, the range of the pitch "d" in Equation (20) shifts to larger.

According to the arrangement of Figs. 17A, 17B, 20A, 20B, and 21, the one-dimensional metal grid 28 whose pitch "d" is less than $\lambda_0/\cos \theta$ is disposed lengthwise or transversally together with half-wavelength plates 32 and 34, so as to perform 45° differential wave detection, thereby, a smaller and more reliable optical pickup for optical recording medium can be accomplished.

Next, there will be described the construction of an optical pickup 41 not requiring a half-wavelength plate. In the optical pickup 41, as shown in Figs. 23A and 23B, the light beam passed through the beam splitter 27 is incident on the one-dimensional metal grid 28 placed in the lengthwise direction. The photodetector 23a is disposed in the region irradiated with the reflected light beam of the one-dimensional metal grid 28, and also a total reflection film 42 is placed in a region irradiated with transmitted light beam. Therefore, the light beam reflected by the total reflection film 42 is incident on the photodetector 23b after being reflected by the total reflection film 29.

In this case, the photodetector 23a is divided into four regions "a", "b", "c", and "d" as in Fig. 20B. The photodetector 23b is divided into four regions "e", "f", "g", and "h" as the photodetector 23a.

In the case of the one-dimensional metal grid 28 of this embodiment, 45° differential wave detection can be implemented without using a half-wavelength plate if the wire 28A is placed so as to satisfy the following equation:

$$\tan\phi = \pm \frac{1}{\cos\theta} \qquad (21)$$

By using Equations (14) and (15), the following equation can be obtained:

$$d \leq \lambda' \cdot \frac{1}{1+\sin\theta'}$$

$$= \frac{\lambda_0}{\sqrt{1-\sin^2\theta \cdot \sin^2\phi}} \cdot \frac{1}{1+ \frac{\sin\theta \cdot \cos\phi}{\sqrt{-\sin^2\theta \cdot \sin^2\phi}}}$$

$$= \lambda_0 \cdot \frac{1}{\sqrt{1-\sin^2\theta \cdot \sin^2 +\sin\theta \cdot \cos\phi}} \qquad \cdots (22)$$

$\sin^2\phi$ and $\cos\phi$ in Equation (22) are given by the following equation:

$$\sin^2\phi = \frac{1}{1 + \frac{1}{\tan^2\phi}} = \frac{1}{1+\cos^2\theta}$$

$$\cos\phi = \sqrt{\frac{\sin^2\phi}{\tan^2\phi}} = \frac{\cos\theta}{\sqrt{1+\cos^2\theta}} \qquad (\because -90° < \phi \leq 90°) \qquad (23)$$

Substituting Equation (23) into Equation (22), the following equation can be obtained:

$$d \leq$$

$$\lambda_0 \frac{1}{\sqrt{1-\sin^2\theta \cdot \frac{1}{1+\cos^2\theta}} + \sin\theta \cdot \frac{\cos\theta}{\sqrt{1+\cos^2\theta}}}$$

$$= \lambda_0 \frac{\sqrt{1+\cos^2\theta}}{\cos\theta(\sqrt{2}+\sin\theta)} \qquad \cdots (24)$$

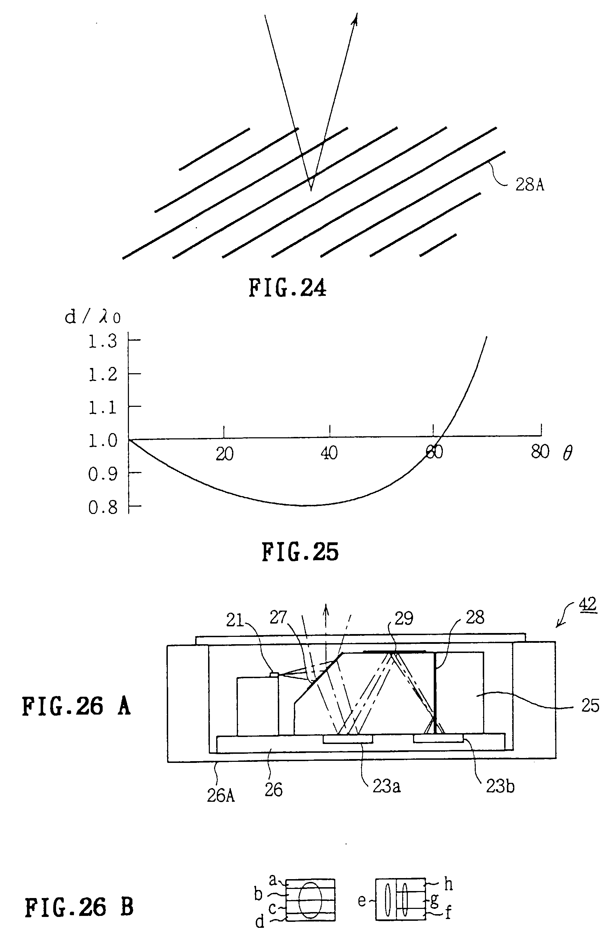

$d/\lambda_0$ expressed by the following equation varies as shown in Fig. 25:

$$d/\lambda_0 = \frac{\sqrt{1+\cos^2\theta}}{\cos\theta(\sqrt{2}+\sin\theta)} \tag{25}$$

Substituting 60° or more for $\theta$ in the equation giving $d/\lambda_0$ allows more advantageous detection.

According to the above-described arrangement, the one-dimensional metal grid 28 whose pitch "d" satisfies Equation (25) is disposed transversally to the optical wave director 25 of the optical pickup 41, so that 45° differential wave detection can be implemented without using the half-wavelength plate and a smaller and more reliable optical pickup for optical recording medium can be realized.

In the case of the embodiment of Figs. 23A and 23B, by making the incident light passed through the beam splitter film 27 incident to the one-dimensional metal grid 28 with the relation of Fig. 24 ($\phi = 0°$, 90°), the reflection light is incident on one photodetector 23a and the transmitted light is successively reflected at the total reflection films 42 and 29 to be incident on to the other photodetector 23. However, instead of this construction, the case of Figs. 26A and 26B can obtain the same effects as the case of the embodiment of Figs. 23A and 23B.

In this connection, the optical pickup 42 in Figs. 26A and 26B successively reflects the incident light passed through the beam splitter film 27 at one photodetector 23a and the total reflection film 29 to become incident on the one-dimensional metal grid 28 which is provided lengthwise. Then, the transmitted light obtained from the one-dimensional metal grid 28 is incident on three divided regions "f", "g", and "h" of the other photodetector 23b and the reflection light is incident onone divided region "e".

(4) Modal expansion methods

Now the modal expansion methods used in the above embodiments will be described. The modal expansion methods, applied to diffraction grating of a special shape, such as a rectangular shape, is known to readily provide results. The methods use the technique that modal expansion in a groove and Rayleigh expansion outside the groove are matched with each other. The expansion methods are now specifically described regarding the one-dimensional metal grid (perfect conductors) 28 shown in Fig. 7.

Let f (x, y) be the space-dependent component of the Z-axis component of a magnetic field (S mode) or an electric field (P mode), which space-dependent component undergoes Rayleigh expansion into a plane wave above and under metal ($y \geq h/2$, $y \leq -h/2$).

Regarding the expansion above the metal ($y \geq h/2$) and under the metal ($y \leq -h/2$), the following equations are satisfied:

$$f(x, y) = \sum_{n=-\infty}^{\infty} \{R_n \exp[ix_n(y - h/2)] + \delta_{n,0}\exp[-ix_0[y - h/2)]\}\exp(\alpha_n x),$$
$$\text{for } y \geq h/2$$

$$\cdots \quad (26)$$

$$f(x,y) = \sum_{n=-\infty}^{\infty} T_n\exp\{R_n\exp[ix_n(y-h/2)]+ \delta_{n,0}\exp[-ix_0(y-h/2)]\}\exp(\alpha_n x), \text{ for } y \geq h/2$$

$$\cdots \quad (27)$$

$$\alpha_n = \alpha_0 + n(2\pi/d)$$

$$\alpha_0 = k_0\sin\theta_0$$

$$k_0 = \omega/c = 2\pi/\lambda \tag{28}$$

$$x_n = \begin{cases} (k_0{}^2 - \alpha_n{}^2)^{1/2} & |k_0| \geq |\alpha_n| \\ i(\alpha_2{}^2 - k_0{}^2)^{1/2} & |k_0| \leq |\alpha_n| \end{cases}$$

$$\cdots \quad (29)$$

where Rn and Tn are complex amplitudes of reflected light and transmitted light.

Solving the Helmholtz equation $\Delta f + k^2 f = 0$ so that a Neumann boundary condition $\partial f/\partial n' = 0$ (n' represents a surface normal vector) (S mode) or a Dirichlet boundary condition $f = 0$ (P mode) is satisfied in intervals $0 \leq x \leq c$ and $-h \leq y \leq h/2$ yields

$$f(x,y) = \sum_{m=0}^{\infty} \phi_m(x,y) \qquad \cdots \quad (30)$$

$$\phi_m(x,y) = \cos(\beta_m x)[a_m \sin(\mu_m y) + b_m \cos(\mu_m y)], \text{ S modes} \qquad (31)$$

$$\phi_m(x,y) = \sin(\beta_m x)[a_m \sin(\mu_m y) + b_m \cos(\mu_m y)], \text{P modes} \qquad (32)$$

where $\beta_m = m\pi/c$, $\mu_m = + (k_0^2 - \beta_m^2)^{1/2}$, and $a_m$ and $b_m$ are complex amplitudes. In the P mode, $\phi_0 = 0$, and $m \geq 1$.

Solving the Helmholtz equation on matching condition that f (x, y) and $\partial f/\partial y$ are continuous on the interval $0 \leq x \leq c$ and at $y = \pm h/2$ yields the following equations when $y = h/2$:

$$\sum_n (R_n + \delta_{n,0}) \exp(i\alpha_n x) = \sum_n (\bar{a}_m + \bar{b}_m) u_m(x) \qquad \cdots \quad (33)$$

$$i \sum_n (R_n - \delta_{n,0}) \exp(i\alpha_n x) = \sum_n (D_{1m}\bar{a}_m + D_{2m}\bar{b}_m) u_m(x) \qquad \cdots \quad (34)$$

When $y = -h/2$

$$\sum_n T_n \exp(i\alpha_n x) = \sum_m (-\bar{a}_m + \bar{b}_m) u_m(x) \qquad \cdots \quad (35)$$

$$-i \sum_n X_n T_n \exp(i\alpha_n x) = \sum_m (D_{1m}\bar{a}_m - D_{2m}\bar{b}_m) u_m(x) \qquad \cdots \quad (36)$$

Thus,

$$\bar{a}_m = a_m \sin(\mu_m h/2)$$

$$\bar{b}_m = b_m \cos(\mu_m h/2)$$

$$D_{1m} = \mu_m \cot(\mu_m h/2)$$

$$D_{2m} = -\mu_m \tan(\mu_m h/2) \qquad (37)$$

$$u_m(x) = \begin{cases} \cos(\beta_m x) & \text{S-modes} \\ \sin(\beta_m x) & \text{P-modes} \end{cases} \qquad \cdots \quad (38)$$

Now an S polarization wave is described. Equations (33) and (35) hold in the interval $0 \leq x \leq c$. In the interval, vectors represented by the equation $u_m(x) = \cos(\beta_m x)$ are at right angles to each other. Thus multiplying Equations (33) and (35) by $u_j(x)$, using

$$I_{m,j} = \int_o^c u_m(x)u_j(x)dx = I_m\delta_{m,j}$$

$$I_m = \begin{cases} c & (m=0) \\ c/2 & (m\geq 1) \end{cases} \qquad \ldots (39)$$

and integrating the expressions over the interval $0 \leq x \leq c$ give

$$(\overline{a}_j + \overline{b}_j)I_j = \sum_n k_{j,n}(R_n + \delta_{n,0}) \qquad \ldots (40)$$

$$(-\overline{a}_j + \overline{b}_j)I_j = \sum_n k_{j,n}T_n \qquad \ldots (41)$$

$$K_{j,n} = \int_o^c \exp(i\alpha_n x)u_j(x)dx \qquad \ldots (42)$$

Since "f" satisfies the Neumann boundary condition $\partial f/\partial n' = 0$ even when $c \leq x \leq d$ and $y = \pm h/2$,

$$i\sum_n x_n (R_n - \delta_{n,0}) \exp(i\alpha_n x) = 0 \qquad \ldots (43)$$

$$i\sum_n x_n T_n \exp(i\alpha_n x) = 0 \qquad \ldots (44)$$

Equations (34) and (43) hold in the interval $0 \leq x \leq c$ and an interval $c \leq x \leq d$, respectively. Thus Equations (34) and (43) are multiplied by $\exp(-i\alpha_u x)$, integrated over the intervals $0 \leq x \leq c$ and $c \leq x \leq b$, respectively, and added to each other. As a result, the orthogonality of $\exp(-i\alpha_u x)$ gives

$$ix_q(R_q - \delta_{q,0}) = \sum_m J_{q,m}(D_{1m}\overline{a}_m + D_{2m}\overline{b}_m) \qquad \ldots (45)$$

$$J_{q,m} = \frac{1}{d}\int_o^c \exp(-i\alpha_q x)u_m(x)dx \qquad \ldots (46)$$

Similarly, from Equations (36) and (44)

$$ix_qT_q = -\sum_n J_{q,m}(D_{1m}\overline{a}_m - D_{2m}\overline{b}_m) \qquad \ldots (47)$$

Equations (40), (41), (45), and (47) are solved as simultaneous equations, containing four unknowns. To solve the equations for Rn and Tn, they are reduced to

$$R_n + T_n \equiv P_n, \ R_n - T_n \equiv M_n \tag{48}$$

Adding Equation (40) to Equation (41) and subtracting Equation (41) from Equation (40) yield

$$\overline{a}_i = \frac{1}{2I_i} \sum_n k_{in}(M_n + \delta_{n,0}) \qquad \cdots (49)$$

$$\overline{b}_i = \frac{1}{2I_i} \sum_n k_{in}(P_n + \delta_{n,0}) \qquad \cdots (50)$$

Adding Equation (45) to Equation (47) and subtracting Equation (47) from Equation (45) yield

$$ix_q(P_q - \delta_{q,0}) = \sum_m J_{q,m} \cdot 2D_{2m}\overline{b}_m \qquad \cdots (51)$$

$$ix_q(M_q - \delta_{q,0}) = \sum_m J_{q,m} \cdot 2D_{im}\overline{a}_m \qquad \cdots (52)$$

Substituting Equations (49) and (50) into Equations (51) and (52) yields

$$ix_q(P_q - \delta_{q,0}) = \sum_m J_{q,m} \frac{D_{2m}}{I_m} \sum_n K_{m,n}(P_n + \delta_{n,0}) \qquad \cdots (53)$$

$$ix_q(M_q - \delta_{q,0}) = \sum_m J_{q,m} \frac{D_{1m}}{I_m} \sum_n K_{m,n}(M_n + \delta_{n,0}) \qquad \cdots (54)$$

These are expressed by a matrix as follows:

$$\left\{\begin{pmatrix} i x_{-n} & 0 & \cdot\cdot & \cdot\cdot & \cdot\cdot & 0 \\ \vdots & \ddots & \ddots & & & \vdots \\ 0 & & \ddots & \ddots & & \vdots \\ \vdots & \ddots & & \ddots & \ddots & \vdots \\ \vdots & & \ddots & i x_0 & \ddots & \vdots \\ \vdots & & & \ddots & \ddots & \vdots \\ \vdots & & & & \ddots & \ddots & \vdots \\ \vdots & & & & \ddots & \ddots & 0 \\ 0 & \cdot\cdot & \cdot\cdot & \cdot\cdot & 0 & i x_n \end{pmatrix} \begin{pmatrix} P_{-n} \\ \vdots \\ \vdots \\ \vdots \\ P_0 \\ \vdots \\ \vdots \\ \vdots \\ P_n \end{pmatrix} - \begin{pmatrix} 0 \\ \vdots \\ \vdots \\ 0 \\ 1 \\ 0 \\ \vdots \\ \vdots \\ 0 \end{pmatrix}\right\}$$

$$\begin{pmatrix} J_{-n,0} & \cdot\cdot & J_{-n,m} \\ \vdots & & \vdots \\ \vdots & & \vdots \\ \vdots & & \vdots \\ J_{n,0} & \cdot\cdot & J_{n,m} \end{pmatrix} \begin{pmatrix} D_{20}/I_0 & 0 & \cdot\cdot & \cdot\cdot & 0 \cdot \\ 0 & \ddots & \ddots & & \vdots \\ \vdots & \ddots & \ddots & \ddots & \vdots \\ \vdots & & \ddots & \ddots & 0 \\ 0 & \cdot\cdot & \cdot\cdot & 0 & D_{2m}/I_m \end{pmatrix} \begin{pmatrix} K_{0,-n} & \cdot\cdot & K_{0,n} \\ \vdots & & \vdots \\ \vdots & & \vdots \\ \vdots & & \vdots \\ K_{m,-n} & \cdot\cdot & K_{m,n} \end{pmatrix}$$

$$\left\{\begin{pmatrix} P_{-n} \\ \vdots \\ \vdots \\ P_0 \\ \vdots \\ \vdots \end{pmatrix} + \begin{pmatrix} 0 \\ \vdots \\ 0 \\ 1 \\ 0 \\ \vdots \end{pmatrix}\right\} \qquad \ldots (55)$$

This matrix is abbreviated as

$$iX(P - \delta) = J(D/I)_2 K(P + \delta) \qquad (56)$$

Thus,

$$P = [iX - J(D/I)_2 K]^{-1}[iX + J(D/I)_2 K]\delta \qquad (57)$$

Similarly,

$$M = [iX - J(D/I)_1 K]^{-1}[iX + J(D/I)_1 K]\delta \qquad (58)$$

In the same way as described above, the following are obtained for a P polarization wave:

$$P = [J(1/DI)_2 Kix - E]^{-1}[J(1/DI)_2 KiX + E]\delta \qquad (59)$$

$$M = [J(1/DI)_1 KiX - E]^{-1}[J(1/DI)_1 KiX + E]\delta \qquad (60)$$

(5) Other embodiments

While the invention has been described with respect to embodiments wherein a one-dimensional metal grid composed of perfect conductors is used, it should be understood that the invention is not limited thereto but may be embodied using a one-dimensional metal grid composed of not perfect conductors if the conductors provide the grating with satisfactory analyzer performance without fail.

Although the invention has also been described with respect to embodiments wherein a beam splitter film is placed on an incident light irradiated surface of a wave director, it should be understood that the invention is not limited thereto but may be embodied by placing a polarization beam splitter in front of a one-dimensional metal grid, which splitter with a P wave transmittance Tp of 100 and an Ts wave transmittance of 25, for example, has enhancing function.

While the invention has further been described with respect to embodiments wherein an optical pickup records information on a magneto-optical disc and reproduces it therefrom, it should be understood that the invention is not limited thereto but may be embodied using an optical pickup which records information on an optical card and reproduces it therefrom.

While the invention has been described in connection with the preferred embodiments thereof, it will be obvious to those skilled in the art that various changes and modifications may be made and it is therefore intended to cover in the appended claims all such changes and modifications as fall within the true spirit and scope of the invention.

**Claims**

1. An optical pickup comprising:

   a laser light source (21) emitting a light beam;
   an objective lens (24) for focusing a light beam emitted from said laser light source on the data recording surface of an optical recording medium (22);
   light receiving means (23a, 23b) for receiving a returned light from said optical recording medium;
   light beam splitting means (27) for splitting said returned light from said optical recording medium, from the emitted light from said laser light source; and
   a wire grid unit (28) positioned between, at least, a part of said light receiving means (23a, 23b) and said light beam splitting means (27), for transmitting polarization component in the light beam, wherein
   said wire grid unit (28) is formed so that the ratio h/d of a pitch "d" to the thickness of metal conductors "h" constituting a wire (28A) is approximately 0.1 or more.

2. The optical pickup according to claim 1, wherein
   a half-wavelength plate (32) is positioned between said optical beam splitting means (27) and said wire grid unit (28).

3. The optical pickup according to claim 2, wherein:

   said wire grid unit (28) is positioned so that a main light is incident on a plane formed by a direction perpendicular to the wire in a wire surface and a normal to said wire surface; and
   said pitch "d" satisfies the following condition:

   $$d \leq \lambda_0 \bullet 1/(1 + \sin\theta)$$

   when $\theta$ is the angle of incidence of a light which is incident via said half-wavelength plate to said wire, and $\lambda_0$ is the wavelength of incident light.

4. The optical pickup according to claim 2, wherein:

   said wire grid unit (28) is positioned so that a main light is incident on a plane formed by said wire direction and a normal to said wire surface; and

said pitch "d" satisfies the following condition:

$$d \leq \lambda_0 \bullet 1/\cos\theta$$

when $\theta$ is the angle of incidence of a light which is incident via said half-wavelength plate to said wire surface, and $\lambda_0$ is the wavelength of the incident light.

5. The optical pickup according to claim 1, wherein:

in said wire grid unit (28), said pitch "d" satisfies the following condition:

$$d \leq \lambda_0 \bullet (\sqrt{1 + \cos^2\theta}) / [\cos\theta (\sqrt{2} + \sin\theta)]$$

when $\theta$ is the angle of incidence of a light incident on said wire surface, and $\lambda_0$ is the wavelength of the incident light.

6. The optical pickup according to claim 1, wherein
said light beam splitting means (27) has a polarization beam splitter film.

7. The optical pickup according to claim 1, wherein
said wire grid unit (28) is positioned so that the angle of incidence of a main incident light is 60° or more.

8. An optical recording medium reproducing apparatus comprising:

a laser light source (21) emitting a light beam;
an objective lens (24) for focusing a light beam emitted from said laser light source on the data recording surface of an optical recording medium (22);
light receiving means (23a, 23b) for receiving a returned light from said optical recording medium, having a plurality of light receiving units;
light beam splitting means (27) for splitting said returned light from said optical recording medium from the emitted light from said laser light source;
a wire grid unit (28) positioned between, at least, a part of said light receiving means (23a, 23b) and said light beam splitting means (27), for transmitting a predetermined polarization component in the light beam, said wire grid unit (28) being formed so that the ratio h/d of a pitch "d" to the thickness of metal conductors "h" consisting of a wire (28A) is approximately 0.1 or more; and
means (13, 14) for detecting an information signal on said optical recording medium, based on the output of the light receiving unit for receiving the polarization component of the light beam transmitted through said wire grid unit (28) and also based on the output of the light receiving unit for receiving the polarization component of a light beam reflected by said wire grid unit (28).

FIG. 1

FIG. 2

FIG. 3

**FIG. 4 A**

**FIG. 4 B**

$$(a+b+c+d)+(e+f+g+h) \quad S4$$

$$(a+b+c+d)-(e+f+g+h) \quad S3$$

$$\{(a+d)-(b+c)\}-\{(e+h)-(f+g)\} \quad S2$$

$$\{(a+b)-(c+d)\}+\{(e+f)-(g+h)\} \quad S1$$

**FIG. 5**

**FIG. 6**

**FIG. 7**

**FIG. 8**

TRANSMITTANCE

1.0

---- THEORETICALLY OBTAINED CURVE

EXPERIMENTALLY OBTAINED CURVE

0.5

0.0

1.0          2.0          3.0

$\lambda$ /d

**FIG. 9**

h/d=0.01

Ts

0.8

TRANSMITTANCE

0.6

0.4

0.2

0

2       3       4       5

$\lambda$ /d

**FIG. 12**

23

FIG. 10 A

FIG. 10 B

FIG. 11 A

FIG. 11 B

FIG. 13 A

FIG. 13 B.

FIG. 14 A

Tp

TRANSMITTANCE

0.15

0.1

0.05    h/d=0.5

2    3    4    5

$\lambda$/d

$\lambda$/d

2    3    4    5

h/d=0.5

REFLECTANCE

0.95

FIG. 14 B

0.9

0.85

Rp

FIG. 15 A

FIG. 15 B

EP 0 731 456 A2

FIG. 16 A

FIG. 16 B

**FIG. 17 A**

**FIG. 17 B**

**FIG. 18**

FIG. 19

FIG. 20 A

FIG. 20 B

FIG. 21

FIG. 22

FIG. 23 A

FIG. 23 B

FIG.24

FIG.25

FIG.26 A

FIG.26 B